# EUROPÄISCHE PATENTSCHRIFT

(11) **EP 0 571 830 B1**
(45) Veröffentlichungstag und Bekanntmachung des Hinweises auf die Patenterteilung: **07.04.1999**
(21) Anmeldenummer: 93107822.4
(22) Anmeldetag: 13.05.1993
(51) Int. Cl.: C08G 18/10, C08G 18/12, C08G 18/42, C08G 18/76

(54) **Thermoplastisch verarbeitbare Polyurethan-Elastomere und Verfahren zur Herstellung**
Thermoplastically processable polyurethanes and process for their production
Elastomères de polyuréthanes thermoplastiquement façonnables et leur procédé de préparation

(30) Priorität: 26.05.1992 DE 4217367
(43) Veröffentlichungstag der Anmeldung: 01.12.1993
(73) Patentinhaber: BAYER AG, 51368 Leverkusen (DE)
(72) Erfinder: Müller, Friedemann, Dr., W-4040 Neuss (DE); Bräuer, Wolfgang, Dr., W-5090 Leverkusen 1 (DE); Ott, Karl-Heinz, Dr., W-5090 Leverkusen 1 (DE); Hoppe, Hans-Georg, Dipl.-Ing., W-5653 Leichlingen (DE)

(56) Entgegenhaltungen:
- DE-A- 1 719 286
- DE-C- 4 002 961
- GB-A- 2 046 281

## Beschreibung

Die Erfindung betrifft thermoplastisch verarbeitbare Polyurethan-Elastomere mit verbessertem Verarbeitungsverhalten und ein Verfahren zur Herstellung durch Weichsegmentvorverlängerung.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyether oder Polyester, organischen Diisocyanaten und kurzkettigen Diolen (Kettenverlängerer) aufgebaut. Sie können kontinuierlich oder diskontinuierlich hergestellt werden. Als die bekanntesten Herstellverfahren werden das sogenannte Bandverfahren und das Extruderverfahren auch technisch genutzt.

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Hierdurch ergeben sich Produkte im Bereich von 70 Shore A bis 75 Shore D.

Zur Verbesserung des Verarbeitungsverhaltens ist bei Spritzgußartikeln eine schnellere Entformbarkeit und bei Extrusionsprodukten eine erhöhte Standfestigkeit von großem Interesse. Von ausschlaggebender Bedeutung für das Entformungsverhalten und die Standfestigkeit der TPU's ist deren Morphologie, d.h. das spezielle Rekristallisationsverhalten.

Die für ein verbessertes Verarbeitungsverhalten geeignete Morphologie wird bei Produkten, die nach üblichen Verfahren hergestellt werden, erst bei hohen Hartsegmentanteilen (System kurzkettiges Diol + Diisocyanat) erreicht. Nachteilig ist, daß dadurch die Beweglichkeit des Weichsegmentes (System Polyol + Diisocyanat) eingeschränkt ist, so daß die Kälteflexibilität und das Fließverhalten verschlechtert werden. Außerdem erhöht man ja gleichzeitig den Härtegrad.

Die Veränderung der Morphologie durch Erhöhung des Molgewichtes des Polyols führt zu einer stärkeren Phasenentmischung und verbesserten mechanischen Werten, aber durch die gleichzeitige Herabsetzung des Hartsegmentanteils zu einer deutlichen Verminderung der Härte (Seefried u.a., J. Appl. Pol. Sci. 19, 2493, 1975). Von einem verbesserten Rekristallisationsvermögen wird deshalb nicht berichtet.

Eine graduelle Morphologiebeeinflussung bei konstanter Rezeptur tritt auch bei Änderung der Dosierreihenfolge der Aufbaukomponenten ein. In der Vergangenheit wurde vor allem der Weg des Weichsegmentprepolymers beschritten. In der häufigsten Variante wird dabei das Polyol mit der gesamten Menge Diisocyanat umgesetzt. Die Kettenverlängerung mit dem niedermolekularen Diol erfolgt in einer zweiten Stufe. Hauptgrund ist der Ausgleich der Reaktivitäten von Polyol und Kettenverlängerer. Zuerst wird die PU-Reaktion mit dem weniger reaktiven Polyol ausgeführt, danach die Reaktion mit dem aktiveren kurzkettigen Diol. Aufgrund des hohen Überschusses von Diisocyanat in der Prepolymerstufe wird eine Verlängerung der Polyole nur im untergeordneten Umfang festgestellt. Morphologisch erfolgt eine stärkere Phasenentmischung, die zu einer Anhebung der mechanischen Eigenschaften führt (Wilkes u.a., J. Appl. Pol. Sci. 29, 2695, 1984). Das Rekristallisationsvermögen ist jedoch nicht oder nur unwesentlich verbessert.

Ein anderes Weichsegment-Prepolymerverfahren wird von Meisert u.a. beschrieben (DE 2 248 382). Durch ein Polyol-Prepolymer im NCO-Unterschuß wird ein OH-terminiertes Prepolymer erzeugt, das im Folgeschritt mit dem Kettenverlängerer und mit einem vom 1, Schritt verschiedenen Diisocyanat umgesetzt wird. Die Erfinder erreichen damit eine Verbreiterung des Aufschmelzbereiches und in der Folge homogenere Folien als bei der üblichen Einschrittreaktion. Eine Verbesserung des Rekristallisationsvermögens wurde auch bei diesen Beispielen nicht beobachtet.

Die oben beschriebene Aufgabe der Verbesserung des Entformungsverhaltens und der Standfestigkeit von TPU's durch eine Steigerung des Rekristallisationsvermögens bei weitgehend gleichbleibendem Härtebereich und Kälteverhalten ist also bisher nicht befriedigend gelöst.

Überraschenderweise wurde ein TPU mit verbessertem Verarbeitungsverhalten gefunden, dadurch gekennzeichnet, daß man in einer mehrstufigen Umsetzung
A) die im wesentlichen linearen Polyole mit Molekulargewichten von 500 bis 5.000 mit einer überschüssigen Menge Diisocyanat der allgemeinen Formel OCN-Z-NCO, wobei Z ein zweiwertiges organisches Radikal ist, zu einem höhermolekularen NCO-Prepolymer, bevorzugt in einem NCO/OH-Verhältnis von 1,1:1 bis 5,0:1, umsetzt,
B) das in Stufe A) hergestellte NCO-Prepolymer mit der Restmenge Diisocyanat mischt, wobei insgesamt unter Hinzuziehung sämtlicher Reaktionskomponenten der Stufen A), B) und C) ein NCO/aktives H-Verhältnis von 0,9:1 bis 1,2:1 eingestellt wird,
C) das in Stufe B) hergestellte Gemisch mit Ethylenglycol, Butandiol, Hexandiol oder 1,4-Di-(beta-hydroxyethyl)hydrochinon als Kettenverlängerer
zum Polyurethan umsetzt.

Bevorzugte Polyole sind Polyester, Polyether, Polycarbonate oder ein Gemisch aus diesen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 500 bis 5.000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethan-diol-polyadipate, 1,4-Butandiol-polyadipate, Ethandiolbutandiol-1,4-polyadipate, 1,6-Hexandiol-neo-pentylglykol-polyadipate, 1,6-Hexandiol-1,4-butandiol-polyadipate und Polycaprolactone. Die Polyesterole besitzen Molekulargewichte von 500 bis 5.000.

Als organische Diisocyanate kommen beispielsweise aliphatische, cycloaliphatische, araliphatische, heterocyclische und aromatische Diisocyanate in Betracht. Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4-und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein thermoplastisch verarbeitbares Produkt entsteht, verwendet werden. Beispiele sind Triphenylmethan-4,4', 4"-triisocyanat und Polyphenyl-polymethylen-polyisocyanate.

Als Kettenverlängerungsmittel werden Ethylenglykol Hexandiol-1,6, Butandiol-1,4 oder 1,4-Di(β-hydroxyethyl)-hydrochinon eingesetzt.

Die Diol-Kettenverlängerer können zusammen mit bis zu 15 % (berechnet auf Kettenverlängerer) aber höchstens soviel eines Triols mit einem Molekulargewicht von bis zu 500, daß ein thermoplastisch verarbeitbares Produkt entsteht, verwendet werden. Beispiele sind Glycerin, Trimethylolpropan und deren niedermolekularen Alkylenoxidaddukte.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der Aufbaukomponenten 0,9:1 bis 1,20:1, vorzugsweise 0,95:1 bis 1,10:1 beträgt.

Geeignete Katalysatoren, welche insbesondere die Reaktion zwischen den NCO-Gruppen der Diisocyanate und den Hydroxylgruppen der Aufbaukomponenten beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctat, Zinndilaurat oder die Zinndialkylsalze aliphatischer Carbonsäuren wie Dibutylzinndiacetat, Dibutylzinndilaurat. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein kann.

Nähere Angaben über die oben genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 beziehungsweise 1964 oder der DE-A 2 901 774 zu entnehmen.

Die Mengen an Reaktionskomponenten zur Prepolymerbildung werden erfindungsgemäß so gewählt, daß das NCO/OH-Verhältnis von Diisocyanat und Polyol 1,1:1 bis 5,0:1, bevorzugt 1,3:1 bis 2,5:1 beträgt. Die Komponenten werden innig vermischt. Die Prepolymerreaktion (Stufe A) sollte im wesentlichen zum vollständigen Umsatz gebracht werden. Anschließend erfolgt die Zugabe des Rest-Diisocyanats und des Kettenverlängerers (Stufe B).

Zur Herstellung von TPU's eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder, und Busskneter, sowie das Mischkopf/Band-Verfahren.

Das erfindungsgemäße TPU kann z.B. auf einem Zweiwellenextruder dadurch hergestellt werden, daß man das Prepolymer im ersten Teil des Extruders herstellt und die Diisocyanatzugabe und Kettenverlängerung im zweiten Teil anschließt. Alternativ können die Aufbaukomponenten des Prepolymers außerhalb des Extruders in einem Mischkopf oder Düse gemischt, die Prepolymer-Reaktion dann im ersten Teil und die oben genannten anschließenden Schritte im zweiten Teil des Extruders durchgeführt werden. Weiterhin kann auch der gesamte Prepolymerschritt vor dem Extruder liegen.

Das erfindungsgemäße thermoplastische verarbeitbare Polyurethan kann als Spritzgußartikel, Folienextrudat, Fasern und Beschichtungsmasse verwendet werden. Bei Spritzgußanwendungen zeichnet es sich durch eine stark verbesserte Entformbarkeit aus, was dem Spritzgußverarbeiter eine verkürzte Taktzeit ermöglicht. Bei Extrusionsprodukten resultiert aus dem erfindungsgemäß hergestellten TPU eine verbesserte Standfestigkeit des Folienschlauches.

In den folgenden Beispielen werden als Maß für die oben beschriebene erfindungsgemäße Morphologieveränderung die Ergebnisse von DSC-Messungen (differential scanning calorimetry) angegeben. Dabei korrelieren die Kristallisationstemperatur TC mit dem Rekristallisationsvermögen, die Schmelzpunkte TM mit der Kristallitgröße und die Schmelz- beziehungsweise Rekristallisationsenthalpie HM beziehungsweise HC mit der Kristallitmenge (C.S. Schollenberger, Abstr. Pap. Am. Chem. Soc. 1979, 83; J. Foks u.a. Eur. Pol. J. 25, 31).

Das Produkt wird im Stickstoff-Medium von -70°C bis 260°C mit 20°C/min ausgeheizt, danach mit 40°C/min auf -70°C abgekühlt. Nach 1 min bei -70°C wird erneut mit 20°C/min auf 260°C erhitzt. In den Aufheizphasen stellen die endothermen Peaks die Schmelzbereiche dar, in der Abkühlphase der exotherme Peak die Kristallisation.

Die Messungen wurden an einem DSC-7 der Firma Perkin Elmer durchgeführt.

### Beispiele

In den Tabellen 1 und 2 wird die Erfindung anhand einiger Beispiele verdeutlicht. Die verwendeten Herstellverfahren sind nachstehend beschrieben.

### Verfahren 1: one shot*

In einem Reaktionsgefäß werden gemäß Tabelle 1 ein Polyol und der Kettenverlängerer Butandiol bei 140°C vorgelegt.

Man gibt unter Rühren 60°C warmes 4,4'-Diphenylmethandiisocyanat (MDI) hinzu, Nach 30 Sekunden gießt man die Reaktionsmischung auf ein beschichtetes Blech und tempert 30 Minuten bei 120°C nach.
* nicht erfindungsgemäßes Vergleichsbeispiel

### Verfahren 2: Weichsegment-Prepolymer*

Analog Verfahren 1 wird das Polyol zuerst mit der Gesamtmenge 4,4'-Diphenylmethandiisocyanat zwei Minuten umgesetzt, danach erfolgt die Butandiol-Zugabe.

Nach 30 Sekunden wird die Reaktionsmischung wie in 1 beschrieben auf ein Blech gegossen und getempert.

### Verfahren 3: Weichsegment-Vorverlängerung

- Stufe 1:: Die Teilmenge 1 des MDI's wird bei ca. 140°C mit dem Polyol unter Rühren zum Umsatz¹⁾ > 90 mol-% bezogen auf das Polyol gebracht.
- Stufe 2:: Dem gerührten Reaktionsgemisch wird die MDI-Teilmenge 2 und anschließend Butandiol zugefügt, Nach intensiver Durchmischung (ca. 20 sec) wird das Reaktionsgemisch auf das Blech gegossen und 30 Minuten bei 120°C getempert.

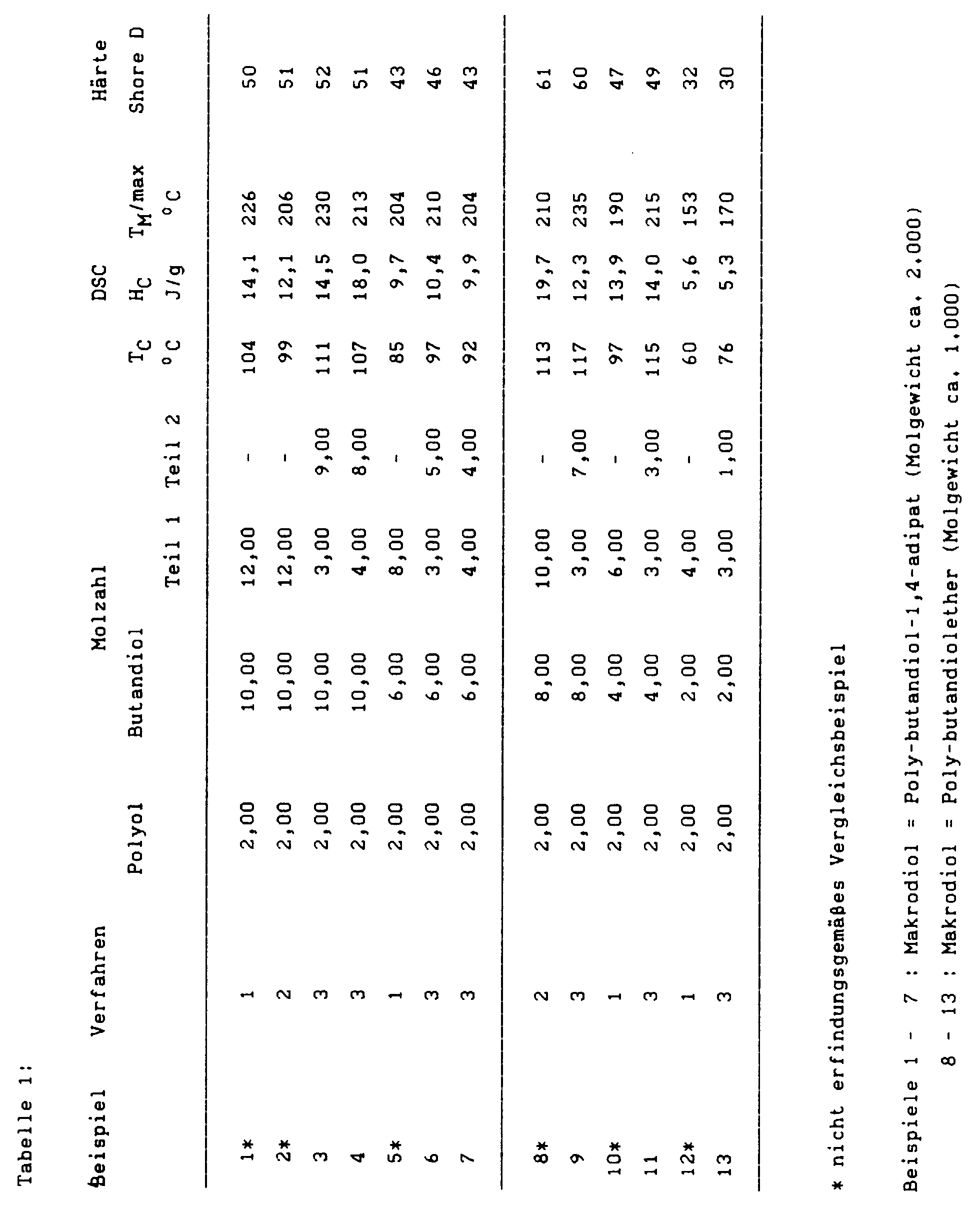

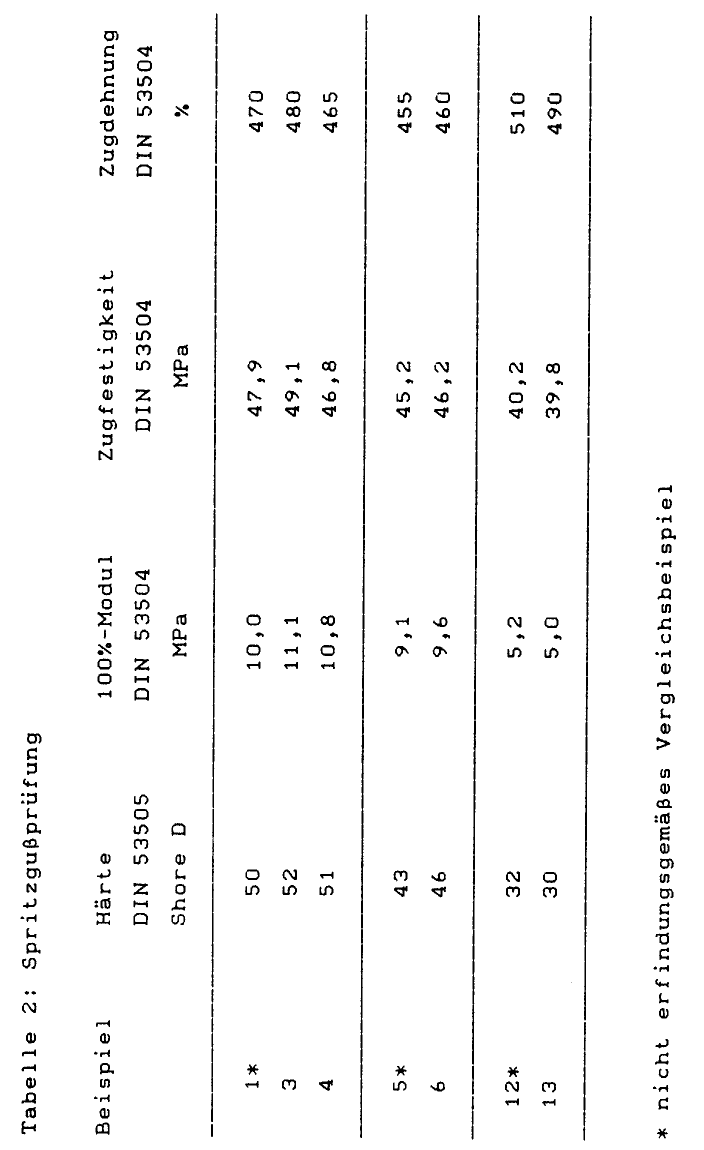

¹⁾ Umsatzbestimmung: Produktproben werden in Dibutylaminlösung abgestoppt. Rücktitration mit HCl ergibt den nicht umgesetzten Rest-NCO-Gehalt, aus dem der Umsatz berechnet werden kann.

Man erkennt in den angegebenen Beispielen den deutlichen Anstieg der Kristallisationstemperatur T_{C} durch die Verwendung des erfindungsgemäßen Weichsegmentvorverlängerungsverfahrens.

Dadurch ist das Entformungsverhalten und die Standfestigkeit von Extrudaten dieser durch das erfindungsgemäße Verfahren hergestellten Produkt wesentlich verbessert.

Die anderen wichtigen Produkteigenschaften bleiben weitgehend gleich.

## Patentansprüche

1. Thermoplastisch verarbeitbares Polyurethanelastomer mit verbessertem Verarbeitungsverhalten, dadurch gekennzeichnet, daß man in einer mehrstufigen Umsetzung
A) die im wesentlichen linearen Polyol mit Molekulargewichten von 500 bis 5.000 mit einer überschüssigen Menge Diisocyanat der allgemeinen Formel OCN-Z-NCO, wobei Z ein zweiwertiges organisches Radikal ist, zu einem höhermolekularen NCO-Prepolymer, bevorzugt in einem NCO/OH-Verhältnis von 1,1:1 bis 5,0:1, umsetzt,
B) das in Stufe A) hergestellte NCO-Prepolymer mit der Restmenge Diisocyanat mischt, wobei insgesamt unter Hinzuziehung sämtlicher Reaktionskomponenten der Stufen A), B) und C) ein NCO/aktives H-Verhältnis von 0,9:1 bis 1,2:1 eingestellt wird,
C) das in Stufe B) hergestellte Gemisch mit Ethylenglycol, Butandiol-1,4, Hexandiol-1,6 oder 1,4-Di-(beta-hydroxyethyl)hydrochinon als Kettenverlängerer
zum Polyurethan umsetzt.

2. Ein thermoplastisch verarbeitbares Polyurethanelastomer gemäß Anspruch 1, dadurch gekennzeichnet, daß das im wesentlichen lineare Polyol Polyester, Polyether, Polycarbonat oder ein Gemisch aus diesen mit einem mittleren Molekulargewicht von 500 bis 5.000 ist.

3. Ein thermoplastisch verarbeitbares Polyurethanelastomer gemäß Anspruch 1 oder 2, dadurch gekennzeichnet, daß das höhermolekulare NCO-Prepolymer in einem NCO/OH-Verhältnis von 1,3:1 bis 2,5:1 hergestellt wird.

4. Ein thermoplastisch verarbeitbares Polyurethanelastomer gemäß einem der Ansprüche 1 bis 3, dadurch gekennzeichnet, daß das Diisocyanat ein Diphenylmethandiisocyanat-Isomerengemisch mit einem 4,4'-Diphenylmethandiisocyanatgehalt von größer 96 Gew.-% und insbesondere 4,4'-Diphenylmethandiisocyanat ist.

5. Verfahren zur Herstellung von thermoplastisch verarbeitbaren Polyurethanelastomeren mit verbessertem Verarbeitungsverhalten gemäß einem der Ansprüche 1 bis 4, dadurch gekennzeichnet, daß man in einer mehrstufigen Umsetzung
A) die im wesentlichen linearen Polyole mit Molekulargewichten von 500 bis 5.000 mit einer überschüssigen Menge Diisocyanat der allgemeinen Formel OCN-Z-NCO, wobei Z ein zweiwertiges organisches Radikal ist, zu einem höhermolekularen NCO-Prepolymer, bevorzugt in einem NCO/OH-Verhaltnis von 1,1:1 bis 5,0:1, umsetzt,
B) das in Stufe A) hergestellte NCO-Prepolymer mit der Restmenge Diisocyanat mischt, wobei insgesamt unter Hinzuziehung sämtlicher Reaktionskomponenten der Stufen A), B) und C) ein NCO/aktives H-Verhältnis von 0,9:1 bis 1,2:1 eingestellt wird,
C) das in Stufe B) hergestellte Gemisch mit Ethylenglycol, Butandiol-1,4, Hexandiol-1,6 oder 1,4-Di-(beta-hydroxyethyl)hydrochinon als Kettenverlängerer
zum Polyurethan umsetzt.

## Claims

1. Thermoplastically processable polyurethane elastomer having improved processing properties, characterized in that, in a multi-stage reaction
A) the substantially linear polyols having molecular weights of 500 to 5,000 are reacted with an excess amount of diisocyanate of the general formula OCN-Z-NCO, wherein Z is a divalent organic radical, to form a higher molecular weight NCO prepolymer, preferably in an NCO/OH ratio of 1.1:1 to 5.0:1,
B) the NCO prepolymer prepared in stage A) is mixed with the remaining amount of diisocyanate, a total NCO/active H ratio, including all the reaction components of stages A), B) and C), of 0.9:1 to 1.2:1 being established,
C) the mixture prepared in stage B) is reacted with ethylene glycol, butane-1,4-diol, hexane-1,6-diol or 1,4-di-(beta-hydroxyethyl)hydroxyquinone as a chain lengthener
to form the polyurethane.

2. A thermoplastically processable polyurethane elastomer according to claim 1, characterized in that the substantially linear polyol is a polyester, polyether, polycarbonate or a mixture of these having an average molecular weight of 500 to 5,000.

3. A thermoplastically processable polyurethane elastomer according to claim 1 or 2, characterized in that the higher molecular weight NCO prepolymer is prepared in an NCO/OH ratio of 1.3:1 to 2.5:1.

4. A thermoplastically processable polyurethane elastomer according to one of claims 1 to 3, characterized in that the diisocyanate is a diphenylmethane-diisocyanate isomer mixture with a 4,4'-diphenylmethane-diisocyanate content of greater than 96 wt.%, and in particular is 4,4'-diphenylmethane-diisocyanate.

5. Process for the preparation of thermoplastically processable polyurethane elastomer having improved processing properties, according to one of claims 1 to 4, characterized in that, in a multi-stage reaction
A) the substantially linear polyols having molecular weights of 500 to 5,000 are reacted with an excess amount of diisocyanate of the general formula OCN-Z-NCO, wherein Z is a divalent organic radical, to form a higher molecular weight NCO prepolymer, preferably in an NCO/OH ratio of 1.1:1 to 5.0:1,
B) the NCO prepolymer prepared in stage A) is mixed with the remaining amount of diisocyanate, a total NCO/active H ratio, including all the reaction components of stages A), B) and C), of 0.9:1 to 1.2:1 being established,
C) the mixture prepared in stage B) is reacted with ethylene glycol, butane-1,4-diol, hexane-1,6-diol or 1,4-di-(beta-hydroxyethyl)hydroxyquinone as a chain lengthener
to form the polyurethane.

## Revendications

1. Elastomère de polyuréthanne apte à un traitement thermoplastique, manifestant un comportement de traitement amélioré, caractérisé en ce que, dans une mise en réaction en plusieurs étapes,
A) on fait réagir les polyols essentiellement linéaires possédant des poids moléculaires de 500 à 5.000 avec une quantité de diisocyanate en excès répondant à la formule générale OCN-Z-NCO où Z représente un radical organique bivalent pour obtenir un prépolymère à teneur NCO possédant un poids moléculaire supérieur, de préférence dans un rapport NCO/OH de 1,1:1 à 5,0:1,
B) on mélange le prépolymère à teneur NCO préparé à l'étape A) avec la quantité résiduelle du diisocyanate, en réglant au total un rapport NCO/atome d'hydrogène actif de 0,9:1 à 1,2:1 en se référant à l'ensemble des composants réactionnels des étapes A), B) et C),
C) on fait réagir le mélange obtenu à l'étape B) avec de l'éthylèneglycol, du butanediol-1,4, de l'hexanediol-1,6 ou de la 1,4-di-(bêta-hydroxyéthyl)hydroquinone à titre d'agent d'allongement de chaîne
pour obtenir le polyuréthanne.

2. Elastomère de polyuréthanne apte à un traitement thermoplastique selon la revendication 1, caractérisé en ce que le polyol essentiellement linéaire est un polyester, un polyéther, un polycarbonate ou un mélange de ces derniers possédant un poids moléculaire moyen de 500 à 5.000.

3. Elastomère de polyuréthanne apte à un traitement thermoplastique selon la revendication 1 ou 2, caractérisé en ce qu'on prépare le prépolymère à teneur NCO possédant un poids moléculaire supérieur dans un rapport NCO/OH de 1,3:1 à 2,5:1.

4. Elastomère de polyuréthanne apte à un traitement thermoplastique selon l'une quelconque des revendications 1 à 3, caractérisé en ce que le diisocyanate représente un mélange d'isomères du diphénylméthanediisocyanate possédant une teneur en 4,4'-diphénylméthanediisocyanate supérieure à 96% en poids, et en particulier le 4,4'-diphénylméthanediisocyanate.

5. Procédé pour a préparation d'élastomères de polyuréthanne aptes à un traitement thermoplastique possédant un comportement de traitement amélioré selon l'une quelconque des revendications 1 à 4, caractérisé en ce que, dans une mise en réaction en plusieurs étapes,
A) on fait réagir les polyols essentiellement linéaires possédant des poids moléculaires de 500 à 5.000 avec une quantité de diisocyanate en excès répondant à la formule générale OCN-Z-NCO où Z représente un radical organique bivalent pour obtenir un prépolymère à teneur NCO possédant un poids moléculaire supérieur, de préférence dans un rapport NCO/OH de 1,1:1 à 5,0:1,
B) on mélange le prépolymère à teneur NCO préparé à l'étape A) avec la quantité résiduelle du diisocyanate, en réglant au total un rapport NCO/atome d'hydrogène actif de 0,9:1 à 1,2:1 en se référant à l'ensemble des composants réactionnels des étapes A), B) et C),
C) on fait réagir le mélange obtenu à l'étape B) avec de l'éthylèneglycol, du butanediol-1,4, de l'hexanediol-1,6 ou de la 1,4-di-(bêta-hydroxyéthyl)hydroquinone à titre d'agent d'allongement de chaîne
pour obtenir le polyuréthanne.
